# EUROPÄISCHE PATENTSCHRIFT

(11) **EP 0 572 594 B1**
(45) Veröffentlichungstag und Bekanntmachung des Hinweises auf die Patenterteilung: **17.01.1996**
(21) Anmeldenummer: 92924610.6
(22) Anmeldetag: 27.11.1992
(51) Int. Cl.: F16C 33/60, F16C 33/76

(54) **KUGELBAHNDREHVERBINDUNG**
BALL-RACE ROTARY COUPLINGS
COURONNE PIVOTANTE A BILLES

(30) Priorität: 18.12.1991 DE 4141759
(43) Veröffentlichungstag der Anmeldung: 08.12.1993
(73) Patentinhaber: Krupp Fördertechnik GmbH, D-47226 Duisburg (DE)
(72) Erfinder: FREITAG, Helmut, D-4150 Krefeld (DE); MEYENBURG, Bernd, D-4000 Düsseldorf 30 (DE)
(86) Internationale Anmeldenummer: EP9202735
(87) Internationale Veröffentlichungsnummer: WO9312352

(56) Entgegenhaltungen:
- DE-B- 2 434 376
- DE-C- 338 589
- GB-A- 2 170 561
- US-A- 4 671 682

## Beschreibung

Die Erfindung bezieht sich auf eine Kugelbahndrehverbindung mit einem aus mehreren Segmenten zusammengesetzten ringförmigen unteren Kugelbahnunterteil, einem diesen außen umschließenden Abdichtring und einem von ihm innen umschlossenen Ölauffangring sowie einer Dichtung zwischen den Segmenten des Kugelbahnunterteils.

Derartige Verbindungen werden beispielsweise bei Tagebaugeräten für die Drehbeweglichkeit des Aufbaues gegenüber dem Untergestell eingesetzt und sind mit einem Durchmesser bis zu mehreren Metern ausgeführt. Die kreisförmige Kugelbahn, in der die Tragkugeln zwischen Kugelbahnoberteil und Kugelbahnunterteil, also zwischen Aufbau und Untergestell laufen, ist mit einer Ölschmierung ausgerüstet. Dabei besteht schon aus wirtschaftlichen Erwägungen die Aufgabe, den Ölverlust so gering wie möglich zu halten. Darüber hinaus ergibt sich aus Umweltschutzgründen die Forderung nach einer praktisch ölverlustfreien Ausführung. Zur Abdichtung der meist aus vier bis sechs, aber auch bis zu zwölf Segmenten zusammengesetzten Kugelbahn an den Trennfugen der Segmente wird bei den bekannten Kugelbahndrehverbindungen dauerplastischer Kitt oder Zweikomponenten-Silikonkautschuk in Nuten mit rundem Querschnitt in den Trennfugen eingebracht. Die Dichtigkeit läßt - selbst bei zunächst befriedigender Ausführung - aufgrund unvermeidlicher geringer Bewegungen der Segmente in den Trennfugen gegeneinander nach, so daß im Dauerbetrieb Leckagen entstehen. Auch das Einziehen von handgeschnittenen Gummiprofilen erbringt keine wesentlich besseren Ergebnisse, nämlich eine dauerhafte Abdichtung. Umweltschutzauflagen erfordern die Feststellung von etwa auftretenden Leckagen und deren Beseitigung. Dazu ist ein erheblicher Aufwand erforderlich, da der Aufbau vom Untergestell abgehoben und die Kugelbahnteile de- und remontiert werden müssen. Da üblicherweise das Kugelbahnunterteil außen mit einem Abdichtring und innen mit einem Ölauffangring oder umgekehrt versehen ist, müssen auch diese abgebaut werden, bevor die Segmente voneinander getrennt werden, um eine neue Dichtung anzubringen. Es ist Aufgabe der vorliegenden Erfindung, gleichzeitig eine zuverlässigere Abdichtung zu schaffen und den erwähnten Aufwand wesentlich zu vermindern.

Danach wird bei einer Kugelbahndrehverbindung der eingangs angegebenen Art vorgeschlagen, daß die Segmente des Kugelbahnunterteils in dessen Trennfugen die Kugelbahn mit Abstand U-förmig umgebende Ausnehmungen mit ebener, vertikaler Grundfläche aufweisen, deren Schenkel zur Innen- und Außenseite des Kugelbahnunterteils hin offen sind und in die strangförmige Abdichtprofile aus Gummi oder Kunststoff eingezogen sind. Dadurch ist ein Ersatz der Abdichtung ohne Anheben des Aufbaues möglich. Es ist lediglich erforderlich, den meist aus mehreren Teilen bestehenden Abdichtring und Ölauffangring zu entfernen, weil dann die Außenseiten der Ausnehmung auf ihrer vollen Schenkellänge freigelegt sind, so daß die Enden der Abdichtprofile nach außen abklappen, die vorhandenen Abdichtprofile herausgezogen und ohne weiteres neue Abdichtprofile eingezogen werden können. Damit sinkt der Reparaturaufwand auf einen geringen Bruchteil seines bisherigen Umfangs.

Zweckmäßig stimmen die Stegbreite und die Schenkelbreite der Ausnehmung jeweils überein, da dann die Abdichtprofile auf ihrer gesamten Länge gleichbleibenden Querschnitt aufweisen können. Außerdem empfiehlt es sich, die Abdichtprofile mit quadratischem Querschnitt auszuführen.

Vorteilhaft ist es auch, wenn die Abdichtprofile an den beiden den Segmenten des Kugelbahnunterteils zugewandten Seiten mit vorzugsweise drei Dichtlippen und mit einem durchlaufenden, vorzugsweise kreisförmigen Hohlraum versehen sind. Damit wird eine auch bei größeren Bewegungen der Segmente höchst wirksame Abdichtung zur Verfügung gestellt, die überdies bequem ein- und herausziehbar ist. Jedenfalls können die Abdichtprofile auch, z.B. bei zwischenzeitlich eingetretener Vergrößerung der Trennfuge, mit einer entsprechend etwaigen Veränderungen angepaßten Profilform ausgeführt sein.

Für die Lage der Abdichtung in der jeweiligen Trennfuge kommt eine Ausführung in Betracht, bei der entweder die Ausnehmung jeder Trennfuge hälftig in jeder Stirnfläche der beiden betreffenden Segmente des Kugelbahnunterteils oder die Ausnehmung jeder Trennfuge vollständig in einer der beiden Stirnflächen der beiden betreffenden Segmente des Kugelbahnunterteils angeordnet ist. Die eine Ausführung hat den Vorteil der symmetrischen Gestaltung der beiden Trennfugenseiten, die andere den der geringeren Nutbearbeitungskosten.

Gemäß einem weiteren Schritt der Erfindung sind der Abdichtring und der Ölauffangring im Bereich der Trennfugen mindestens in der Breite der Abdichtprofile unterbrochen. Die Unterbrechungen sind durch Ausbaustücke verschlossen. Dadurch wird erreicht, daß für eine Erneuerung der Abdichtung noch nicht einmal der Abdichtring und der Ölauffangring insgesamt entfernt werden müssen, sondern lediglich die Ausbaustücke abzunehmen und nach dem Ersatz der Abdichtung wieder anzubringen sind. Außerdem sind die Ausbaustücke durch eine Person und damit ohne besondere Schwierigkeiten handhabbar.

Besonders günstig wird eine Leckageüberwachung ermöglicht, wenn in den Ausnehmungen im Bereich des Übergangs zwischen Steg und Schenkel außerhalb des Abdichtprofils eine Leckageüberwachung angeschlossen ist. Der Raum für den Anschluß steht ohnehin zur Verfügung und kann für eine sofort ansprechende oder weniger empfindliche Leckagemeldung genutzt werden und ist im übrigen leicht und ohne Ausbau der Abdichtung zugänglich, so daß er auch zu Kontrollzwecken inspiziert werden kann. Eine Erneuerung der Abdichtung ist nur noch notwendig, wenn diese tatsächlich schadhaft geworden ist.

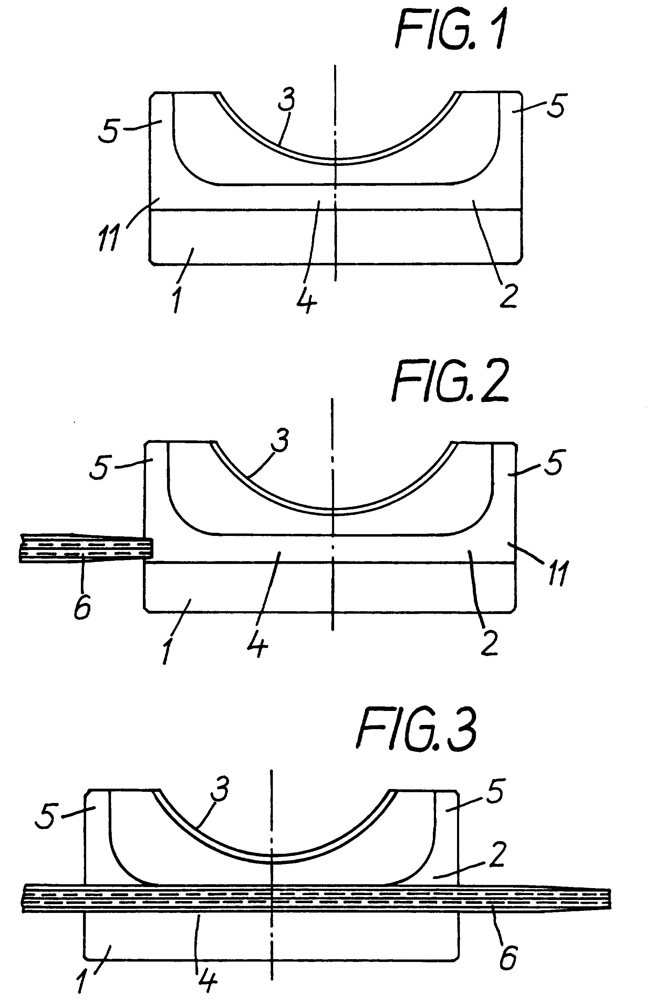

In der Zeichnung ist ein Ausführungsbeispiel einer erfindungsgemäßen Kugelbahndrehverbindung dargestellt, und zwar in
- Fig. 1: in Stirnansicht eines Segmentes eines Kugelbahnunterteils, in
- Fig. 2: in derselben Ansicht mit angesetztem Abdichtprofil, in
- Fig. 3: in derselben Ansicht mit eingezogenem Abdichtprofil, in

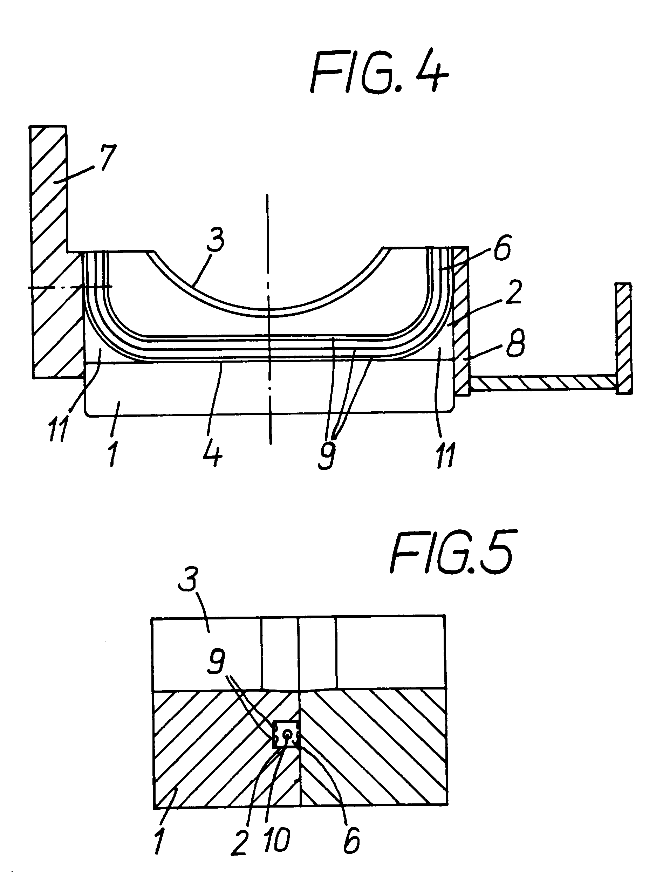

- Fig. 4: in derselben Ansicht mit vollständig eingebrachtem Abdichtprofil im Einbauzustand mit angebautem Abdichtring und Ölauffangring und in
- Fig. 5: im Querschnitt durch eine Trennfuge mit einseitig eingelegtem Abdichtprofil.

In einem Segment 1 eines Kugelbahnunterteils eines Tagebaugerätes, das zwischen Aufbau und Untergestell eine aus Kugelbahnunterteil und Kugelbahnoberteil zusammengesetzte Kugelbahndrehverbindung mit den Aufbau tragenden Tragkugeln aufweist, ist stirnseitig, d.h. in der die Trennfuge zwischen den Segmenten bildenden Fläche, eine Ausnehmung 2 angeordnet, die U-förmig die Kugelbahn 3 umgibt und mit ebenflächiger, vertikaler Grundfläche ausgeführt ist. Breite des Steges 4 und der Schenkel 5 der Ausnehmung 2 sind gleich, so daß sie ein durchgehend strangförmiges Abdichtprofil 6 aufnehmen können. Die Schenkel 5 sind nach außen offen, damit die Abdichtprofile 6 hier leicht zugänglich sind. Die Öffnungen sind während des Betriebes lediglich durch Ausbaustücke 7 und 8 verschlossen, die entsprechende Unterbrechungen eines das Kugelbahnunterteil im Ausführungsbeispiel außen umschließenden Abdichtringes und eines von ihm innen umschlossenen Ölauffangringes ausfüllen. Die Abdichtprofile 6 sind im wesentlichen quadratisch geformt, gemäß Fig. 5 einseitig in eine Trennfuge eingelegt und an den beiden segmentseitigen Flächen mit je drei Dichtlippen 9 ausgestattet und mit einem durchlaufenden kreisförmigen Hohlraum 10 versehen. Im Bereich 11 des Übergangs zwischen Steg 4 und Schenkel 5 der Ausnehmung 2 ist eine Leckageüberwachung zur Überprüfung der Dichtwirkung der Abdichtprofile 6 angeschlossen.

## Patentansprüche

1. Kugelbahndrehverbindung mit einem aus mehreren Seqmenten (1) zusammengesetzten ringförmigen unteren Kugelbahnunterteil, einem diesen außen umschließenden Abdichtring und einem von ihm innen umschlossenen Ölauffangring sowie einer Dichtung (6) zwischen den Segmenten (1) des Kugelbahnunterteils, dadurch gekennzeichnet, daß die Segmente (1) des Kugelbahnunterteils in dessen Trennfugen die Kugelbahn (3) mit Abstand U-förmig umgebende Ausnehmungen (2) mit ebener, vertikaler Grundfläche aufweisen, deren Schenkel (5) zur Innen- und Außenseite des Kugelbahnunterteils hin offen sind und in die strangförmige Abdichtprofile (6) aus Gummi oder Kunststoff eingezogen sind.

2. Kugelbahndrehverbindung nach Anspruh 1, dadurch gekennzeichnet, daß die Stegbreite und die Schenkelbreite der Ausnehmungen übereinstimmen.

3. Kugelbahndrehverbindung nach Anspruch 1 oder 2, dadurch gekennzeichnet, daß die Abdichtprofile (6) quadratischen Querschnitt haben.

4. Kugelbahndrehverbindung nach Anspruch 1, 2 oder 3, dadurch gekennzeichnet, daß die Abdichtprofile (6) an den beiden den Segmenten (1) des Kugelbahnunterteils zugewandten Seiten mit vorzugsweise drei Dichtlippen (9) und mit einem durchlaufenden, vorzugsweise kreisförmigen Hohlraum (10) versehen sind.

5. Kugelbahndrehverbindung nach einem der vorhergehenden Ansprüche, dadurch gekennzeichnet, daß die Ausnehmung (2) jeder Trennfuge hälftig in jeder Stirnfläche der beiden betreffenden Segmente (1) des Kugelbahnunterteils angeordnet ist.

6. Kugelbahndrehverbindung nach einem der Ansprüche 1 bis 4, dadurch gekennzeichnet, daß die Ausnehmung (2) jeder Trennfuge vollständig in einer der beiden Stirnflächen der beiden betreffenden Segmente (1) des Kugelbahnunterteils angeordnet ist.

7. Kugelbahndrehverbindung nach einem der vorhergehenden Ansprüche, dadurch gekennzeichnet, daß der Abdichtring und der Ölauffangring im Bereich der Trennfugen mindestens in der Breite der Abdichtprofile (6) unterbrochen und die Unterbrechungen durch Ausbaustücke (7, 8) verschlossen sind.

8. Kugelbahndrehverbindung nach einem der vorhergehenden Ansprüche, dadurch gekennzeichnet, daß in den Ausnehmungen (2) im Bereich (11) des Übergangs zwischen Steg (4) und Schenkel (5) außerhalb des Abdichtprofils (6) eine Leckageüberwachung angeschlossen ist.

## Claims

1. Ball race rotary coupling with a ring-shaped lower ball race substructure composed of several segments (1), with a sealing ring surrounding this on the outside, with an oil collecting ring surrounded by it on the inside and with a seal (6) between the segments (1) of the ball race substructure, characterised in that in the parting lines of the ball race substructure the segments (1) of said ball race substructure have recesses (2) surrounding the ball race (3) in the shape of a U and at a distance therefrom with a plane vertical base area, the flanks (5) of which are open towards the inside and outside of the ball race substructure, and into which are inserted strand-like rubber or plastic sealing profiles (6).

2. Ball race rotary coupling according to Claim 1, characterised in that the web width and flank width of the recesses correspond to one another.

3. Ball race rotary coupling according to Claim 1 or 2, characterised in that the sealing profiles (6) have square cross-sections.

4. Ball race rotary coupling according to Claims 1, 2 or 3, characterised in that on two sides facing the segments (1) of the ball race substructure, the sealing profiles (6) are provided with preferably three sealing lips (9) and with a continuous, preferably circular, cavity (10).

5. Ball race rotary coupling according to one of the preceding claims, characterised in that the recess (2) of each parting line is disposed with half in each face of the two corresponding segments (1) of the ball race substructure.

6. Ball race rotary coupling according to one of Claims 1 to 4, characterised in that the recess (2) of each parting line is disposed completely in one of the two faces of the two corresponding segments (1) of the ball race substructure.

7. Ball race rotary coupling according to one of the preceding claims, characterised in that the sealing ring and the oil collecting ring are broken in the area of the parting lines at least in the width of the sealing profiles (6) and the broken areas are closed off by extension pieces (7, 8).

8. Ball race rotary coupling according to one of the preceding claims, characterised in that a leakage monitoring means is connected in the recesses (2) in the area (11) of the transition between the web (4) and the flank (5) outside the sealing profile (6).

## Revendications

1. Couronne pivotante à billes comprenant une partie de couronne inférieure annulaire composée de plusieurs segments (1), entourée par l'extérieur d'une bague d'étanchéité, entourant par l'intérieur une bague collectrice d'huile et comprenant une garniture d'étanchéité (6) entre les segments (1) de la partie inférieure de couronne, caractérisée en ce que les segments (1) de la partie de couronne inférieure présentent, dans leurs fentes de séparation, des évidements (2) de surface de fond verticale et plane entourant à distance la couronne à billes (3) en formant un U dont les côtés (5) sont ouverts en direction de la face interne et externe de la partie inférieure de couronne et dans lesquels sont insérés des profilés d'étanchéité (6) en caoutchouc ou matière plastique ayant la forme d'un écheveau.

2. Couronne pivotante à billes selon la revendication 1, caractérisée en ce que la largeur de dos et la largeur de côté des évidements coïncident.

3. Couronne pivotante à billes selon la revendication 1 ou 2, caractérisée en ce que les profilés d'étanchéité (6) ont une section transversale quadrilatère.

4. Couronne pivotante à billes selon la revendication 1, 2 ou 3, caractérisée en ce que les profilés d'étanchéité (6) sont munis, des deux côtés tournés vers les segments (1) de la partie inférieure de couronne, de préférence de trois lèvres d'étanchéité (9) et d'une cavité (10) continue de préférence circulaire.

5. Couronne pivotante à billes selon l'une des revendications précédentes, caractérisée en ce que l'évidement (2) de chaque fente de séparation se trouve par moitié dans chaque surface frontale des deux segments considérés (1) de la partie inférieure de couronne.

6. Couronne pivotante à billes selon l'une des revendications 1 à 4, caractérisée en ce que l'évidement (2) de chaque fente de séparation est disposé entièrement dans l'une des deux surfaces frontales des deux segments considérés (1) de la partie inférieure de couronne.

7. Couronne pivotante à billes selon l'une des revendications précédentes, caractérisée en ce que la bague d'étanchéité et la bague collectrice d'huile sont interrompues dans la zone des fentes de séparation au moins dans la largeur des profilés d'étanchéité (6) et en ce que les interruptions sont fermées par des pièces de recouvrement (7, 8).

8. Couronne pivotante à billes selon l'une des revendications précédentes, caractérisée en ce qu'un contrôle de fuite est raccordé dans les évidements (2) dans la zone (11) de passage entre le dos (4) et les côtés (5) à l'extérieur du profilé d'étanchéité (6).
